# EUROPÄISCHE PATENTSCHRIFT

(11) **EP 2 214 997 B1**
(45) Veröffentlichungstag und Bekanntmachung des Hinweises auf die Patenterteilung: **10.04.2013**
(21) Anmeldenummer: 08844075.5
(22) Anmeldetag: 28.10.2008
(51) Int. Cl.: B65H 75/36, B66B 7/06, H02G 11/00

(54) **VORRICHTUNG ZUM SAMMELN EINES SCHLEPPKABELS**
DEVICE FOR COLLECTING A TRAILING CABLE
DISPOSITIF POUR RECUEILLIR UN CÂBLE TRAÎNANT

(30) Priorität: 29.10.2007 DE 202007015008 U
(43) Veröffentlichungstag der Anmeldung: 11.08.2010
(73) Patentinhaber: GEDA-Dechentreiter GmbH & Co. KG., 86663 Asbach-Bäumenheim (DE)
(72) Erfinder: STERNER, Richard, 85128 Wolkertshofen (DE); GRAF, Ulrich, 86609 Donauwörth (DE)
(74) Vertreter: Zeitler - Volpert - Kandlbinder
(86) Internationale Anmeldenummer: PCT/EP2008/009098
(87) Internationale Veröffentlichungsnummer: WO 2009/056276

(56) Entgegenhaltungen:
- DE-C1- 3 604 094
- DE-U1- 29 500 430
- FR-A- 1 424 449

## Beschreibung

Die Erfindung bezieht sich auf eine Vorrichtung zum Sammeln eines Schleppkabels eines Aufzugs, insbesondere Bauaufzugs, nach dem Oberbegriff des Anspruchs 1.

Eine derartige Vorrichtung ist aus der Praxis bekannt. Bei Bauaufzügen verbindet das Schleppkabel eine bodenseitige Energiequelle mit der Antriebseinheit eines entlang einer Leiter oder eines Mastes auf und ab verfahrbaren Hubschlittens. Üblicherweise ist die Anordnung derart ausgebildet, dass dieses Schleppkabel lose vom Hubschlitten bzw. von dessen Antriebseinheit herunterhängt und in Abhängigkeit von der jeweiligen Höhenstellung des Hubschlittens mehr oder weniger stark von der Vorrichtung zum Sammeln des Schleppkabels abgezogen- bzw. aus dieser herausgezogen ist. Eine solche Vorrichtung ist in der Praxis beispielsweise als eine einfache, runde, oberseitig offene Tonne, auch Kabeltopf genannt, ausgebildet.

Nachteilig ist dabei, dass das in der Praxis verwendete, lose herabhängende Rundkabel beim Eintritt in den Kabeltopf zwar in der Regel geführt ist, im Kabeltopf sich jedoch unkontrolliert ablegt und nach einigen Lastspielen mehr oder weniger stark verdrillt im Kabeltopf zu liegen kommt. Dadurch ist letztlich die Gefahr der Verformung durch Verrutschen des Kabelverbandes oder sogar des Brechens des Schleppkabels erhöht, was zu einer geringeren Laufzeit und damit zu einer abnehmenden Lebensdauer des Kabels führen kann. Im Übrigen hat ein Kabeltopf der vorerwähnten Art am Boden einen hohen Platzbedarf.

Aus der DE 295 00 430 U1 ist eine Aufnahmevorrichtung zur Abgabe und Aufnahme insbesondere eines Verbindungskabels bekannt, welche an einem Fahrzeug angeordnet ist und zumindest eine Rückholeinrichtung für abgegebenes Verbindungskabel aufweist. Diese Aufnahmevorrichtung ist als Behältnis mit Umlenkwand, dieser gegenüberliegender Begrenzungswand und zwei Umlenkwand und Begrenzungswand verbindenden Seitenwänden ausgebildet, wobei in der Begrenzungswand eine Wandöffnung zur Abgabe und Aufnahme des Verbindungskabels angeordnet ist, durch welche die Rückholeinrichtung das Verbindungskabel der Umlenkwand unter einem spitzen Winkel zuführt. Die Abgabe des Verbindungskabels erfolgt derart, dass die einzelnen Windungen bzw. Mäander des Verbindungskabels einzeln und nacheinander ohne Verwicklungen oder Verknotungen des Verbindungskabels aufgelöst werden.

Der Erfindung liegt die Aufgabe zugrunde, eine Vorrichtung der eingangs erwähnten Art zu schaffen, bei der die Handhabung des Schleppkabels verbessert und damit dessen Laufzeit erhöht ist.

Diese Aufgabe wird erfindungsgemäß durch eine Vorrichtung mit den Merkmalen des Anspruchs 1 gelöst.

Vorteilhafte Weiterbildungen sind Gegenstand der abhängigen Ansprüche.

Erfindungsgemäß ist das Schleppkabel ein Flachkabel mit einer Schmalseite und einer Breitseite, wobei die Schmalseite des Flachkabels im Kabeltopf etwa parallel zu dessen Längsachse verläuft. Ein derartiges Flachkabel ermöglicht eine deutlich höhere Anzahl von Lastspielen als ein herkömmliches Rundkabel. Letztere zeigen bei etwa 5.000 Lastspielen bereits deutliche Gebrauchsspuren oder sind nach dieser Anzahl von Lastspielen bereits so schadhaft, dass sie nicht weiter in der Praxis eingesetzt werden können. Im Gegensatz dazu ermöglicht ein erfindungsgemäßes Flachkabel mindestens 20.000 Lastspiele, so dass ein derartiges Kabel deutlich wirtschaftlicher als ein herkömmliches Kabel einsetzbar ist. Ferner ist beim Einsatz eines Flachkabels die Gefahr des Verdrehens des Kabels noch weiter vermindert, so dass erst recht beim Einsatz eines Flachkabels höhere Aufbauhöhen als bei Verwendung eines Rundkabels zum Einsatz kommen können. Dadurch ist die erfindungsgemäße Vorrichtung weiter deutlich wirtschaftlicher als eine herkömmliche Vorrichtung einsetzbar. Gerade beim Einsatz eines Flachkabels kann der erfindungsgemäße Kabeltopf äußerst flach, d.h. mit geringer Tiefe, ausgebildet sein, wodurch die Handhabung der erfindungsgemäßen Vorrichtung ebenfalls verbessert ist. Ferner weist der Kabeltopf einen langgestreckten Querschnitt auf und ist derart angeordnet und ausgebildet, dass das Schleppkabel in dem Kabeltopf in Mäandern ablegbar ist. Dies ermöglicht ein geordnetes Ablegen des Schleppkabels im Kabeltopf, wodurch die Gefahr des Verdrillens oder Verdrehens des Kabels stark vermindert bzw. nahezu vollständig beseitigt ist. Damit lässt sich bei ein und demselben Schleppkabel eine höhere Anzahl von Lastspielen realisieren, wodurch die Standzeit des Kabels verbessert ist. Da ein Verdrehen des Kabels, wie zuvor erwähnt, wirksam reduziert bzw. ausgeschlossen ist, lassen sich mit der erfindungsgemäßen Vorrichtung größere Aufbauhöhen für den Aufzug, insbesondere den Bauaufzug, realisieren. Ferner hat ein derartig ausgebildeter Kabeltopf einen geringeren Platzbedarf am Boden, da dessen Tiefe deutlich geringer als beispielsweise der Durchmesser eines herkömmlichen, runden Kabeltopfes ausgebildet sein kann.

Vorteilhafterweise sind die im Kabeltopf gebildeten Mäander des Schleppkabels übereinander liegend angeordnet. Dadurch kann der im Kabeltopf zum Ablegen des Schleppkabels zur Verfügung stehende Raum gut zum Aufnehmen des Kabels ausgenutzt werden. Anders als bei einem herkömmlichen Kabeltopf erstreckt sich das im Kabeltopf abgelegte Schleppkabel im Wesentlichen über den gesamten langgestreckten Querschnitt des Kabeltopfes, wodurch letztlich der vorerwähnte geringere Platzbedarf ermöglicht ist. Insofern kann das Schleppkabel bei der erfindungsgemäßen Vorrichtung im Kabeltopf wesentlich "dichter" abgelegt und damit "gepackt" als in einem herkömmlichen, runden Kabeltopf sein.

Vorteilhafterweise hat der Kabeltopf einen rechteckigen Querschnitt, wobei das Verhältnis von Kabeltopfbreite zu Kabeltopftiefe etwa 5:1 bis 15:1, vorzugsweise etwa 10:1 beträgt. Ein derartiger Kabeltopf ist einfach aufgebaut und relativ kostengünstig herstellbar. Die gewählten Verhältnisse von Kabeltopfbreite zu -tiefe lassen erkennen, wie langgestreckt und damit wie schmal der Kabeltopf im Verhältnis zu seiner Breite ausgebildet sein kann.

Gemäß einer anderen Weiterbildung der Erfindung nehmen Kabeltopftiefe und Kabeltopfbreite mit zunehmender Flexibilität und damit abnehmender Shore-Härte des Schleppkabels ab. Damit lässt sich der Platzbedarf der erfindungsgemäßen Vorrichtung weiter verringern. Andererseits ist dadurch auch zumindest die grundsätzliche Richtung einer Dimensionierung des Kabeltopfes vorgeschlagen, falls in einer bestehenden Vorrichtung ein flexiblereres oder steiferes Kabel zum Einsatz kommen soll.

Gemäß einer anderen bevorzugten Ausführungsform der Erfindung beträgt das Verhältnis von Kabeltopftiefe zur Dicke des Schleppkabels etwa 8:1 bis 22:1, vorzugsweise 10:1 bis 20:1, besonders bevorzugt 15:1, wobei klar ist, dass die minimale Kabeltopftiefe größer als die Breite des Schleppkabels ist. Damit ist eine weitere Abhängigkeit bei der Dimensionierung des Kabeltopfes als Funktion der Ausbildung des Schleppkabels angegeben.

Ausführungsformen des Erfindungsgegenstandes werden nachfolgend anhand der Zeichnung näher erläutert, wobei alle beschriebenen und/oder bildlich dargestellten Merkmale für sich oder in beliebiger Kombination den Gegenstand der vorliegenden Erfindung unabhängig von ihrer Zusammenfassung in den Ansprüchen oder deren Rückbeziehung bilden. Es zeigen:
- Fig. 1: eine schematische, perspektivische, teilweise weggebrochen dargestellte Ansicht einer Vorrichtung zum Sammeln eines Schleppkabels eines Aufzugs insbesondere Bauaufzugs;
- Fig. 2: einen schematischen, teilweisen Schnitt durch ein als Flachkabel ausgebildetes Schleppkabel;
- Fig. 3: ein schematisches Schaubild, in welchem die Schleppkabeldicke über der Kabeltopfbreite in Abhängigkeit der Shore-Härte des Kabels angegeben ist; und
- Fig. 4: ein schematisches Schaubild, in welchem die Schleppkabelflexibilität über der Kabeltopftiefe angegeben ist.

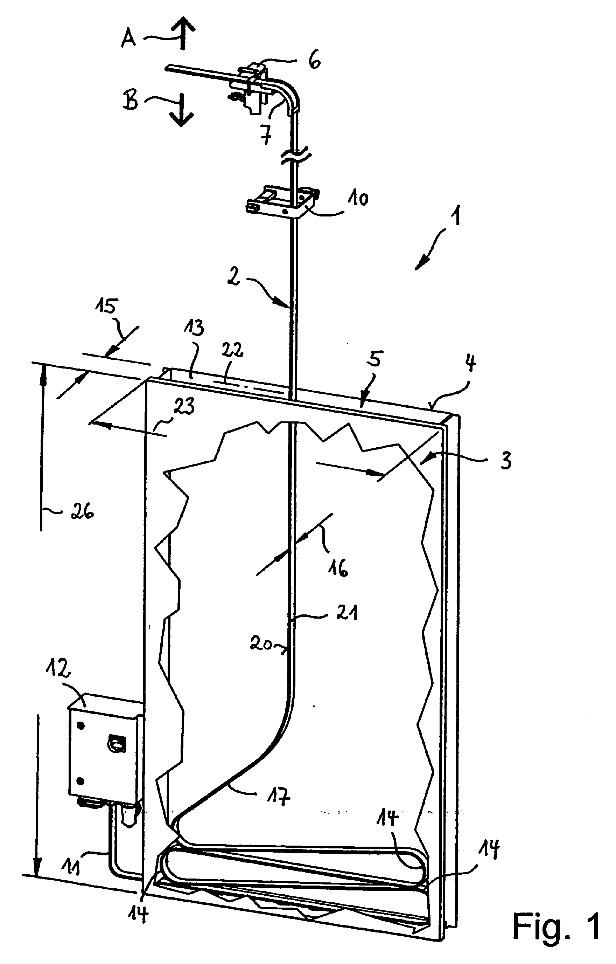

In Fig. 1 ist schematisch eine perspektivische, teilweise weggebrochen dargestellte Ansicht einer Vorrichtung 1 zum Sammeln eines Schleppkabels eines Aufzugs, insbesondere aber nicht ausschließlich eines nicht näher dargestellten Bauaufzugs, gezeigt.

Die Vorrichtung 1 hat einen Kabeltopf 3, welcher an seinem oberen Rand 4 eine Öffnung 5 aufweist. Der Querschnitt der Öffnung 5 entspricht demjenigen des Kabeltopfes 3. Durch die Öffnung 5 ist das Schleppkabel 2 in dem Kabeltopf 3 ablegbar oder aus diesem herausführbar, je nach dem ob ein nicht näher gezeigter Hubschlitten in Richtung des Pfeils A nach oben oder in Richtung des Pfeils B nach unten, d.h. zum Kabeltopf 3 hin, bewegt wird. Es ist klar, dass bei einer Bewegung des Hubschlittens in Richtung des Pfeils A das Schleppkabel 2 aus dem Kabeltopf 3 herausgezogen und bei einer umgekehrten Bewegung des Hubschlittens in Richtung des Pfeils B im Kabeltopf abgelegt wird.

Im Bereich des oberen Endes des Schleppkabels 2, also dort, wo der nicht näher gezeigte Hubschlitten, vorgesehen ist, ist in Fig. 1 lediglich ein Schleppkabelhalter 6 schematisch angedeutet, welcher am Hubschlitten oder an einem nicht näher gezeigten Fahrkorb montiert ist. Über eine bogenförmige Abrundung 7 des Schleppkabelhalters 6 und eine Kabelführung 10 wird das Schleppkabel 2 über die Öffnung 5 in das Innere des Kabeltopfes 3 eingeleitet.

Das untere Ende 11 des Schleppkabels 2 ist aus dem Kabeltopf 3 herausgeführt und mit einem Schaltkasten 12 verbunden, welcher außen an dem Kabeltopf 3 befestigt sein kann, wie dies schematisch in Fig. 1 angedeutet ist.

Erfindungsgemäß hat der Kabeltopf 3 einen langgestreckten Querschnitt 13, wobei der Kabeltopf derart angeordnet und ausgebildet ist, dass das Schleppkabel 2 in dem Kabeltopf 3 in Mäandern 14 ablegbar ist. Der Einfachheit halber sind in Fig. 1 lediglich drei Mäander 14 gezeigt. Wie in Fig. 1 angedeutet, sind die im Kabeltopf 3 gebildeten Mäander 14 des Schleppkabels 2 übereinander liegend angeordnet. Insofern ist die Tiefe 15 des Kabeltopfes 3 so gewählt und auf die Breite 16 des Schleppkabels 3 abgestimmt, dass die zuvor erwähnte übereinander liegende Anordnung der Mäander 14 des Kabels sich beim Ablegen desselben im Kabeltopf automatisch ergibt.

Ferner ist das Schleppkabel 2 ein Flachkabel 17 mit einer Schmalseite 20 und einer Breitseite 21. Das Flachkabel 17 ist derart über den langgestreckten Querschnitt 13 in den Kabeltopf 3 eingeführt, dass die Schmalseite 20 des Flachkabels 17 im Kabeltopf etwa parallel zu dessen Längsachse 22, d.h. parallel zur Breite 23 des Kabeltopfes, verläuft.

Gemäß einer ebenfalls bevorzugten Ausführungsform der Erfindung hat der Kabeltopf 3 einen rechteckigen Querschnitt 13, wobei das Verhältnis von Kabeltopfbreite 23 zu Kabeltopftiefe 15 etwa 5:1 bis 15:1, vorzugsweise etwa 10:1, beträgt. Gemäß einer weiter bevorzugten Ausführungsform der Erfindung nehmen Kabeltopftiefe 15 und Kabeltopfbreite 23 mit zunehmender Flexibilität und damit abnehmender Shore-Härte des Schleppkabels 2 ab. Die Shore-Härte ist ein Maß für den Widerstand eines Materials gegen das Eindringen eines Gegenstandes und wird in dimensionslosen Shore-Härteeinheiten ausgedrückt. Eine geringe Shore-Härte entspricht einem eher weichen oder flexiblen Material; umgekehrt entspricht eine hohe Shore-Härte einem eher harten oder spröden und damit wenig flexiblen Material.

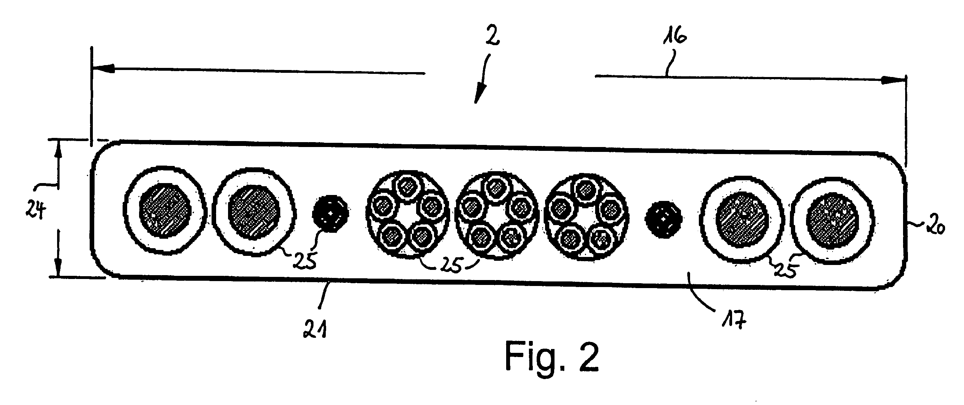

Gemäß einer anderen, bevorzugten Ausführungsform der Erfindung beträgt das Verhältnis von Kabeltopftiefe 15 zur Dicke 24 des Schleppkabels 2, auch Höhe des Schleppkabels genannt, etwa 8:1 bis 22:1, vorzugsweise 10:1 bis 20:1, besonders bevorzugt 15:1. Ein als Flachkabel 17 ausgebildetes Schleppkabel 2 ist teilweise im Schnitt in Fig. 2 gezeigt. Das Flachkabel 17 ist von mehreren elektrischen Leitungen 25 durchsetzt, welche sich in Längsrichtung des Kabels erstrecken. Die Leitungen 25 sind in Fig. 2 lediglich schematisch dargestellt und umfassen beispielsweise Leitungen zur Spannungsversorgung einer nicht näher gezeigten Antriebseinheit insbesondere für einen nicht näher gezeigten Bauaufzugs sowie Leitungen, mit denen die Antriebseinheit gesteuert werden kann. Ferner kann das Flachkabel Leitungen zur Zugentlastung aufweisen.

Der langgestreckte Querschnitt 13 des Kabeltopfes 3 kann beispielsweise auch elliptisch ausgebildet sein (nicht gezeigt) oder als Rechteckquerschnitt abgerundete Ecken oder Enden aufweisen.

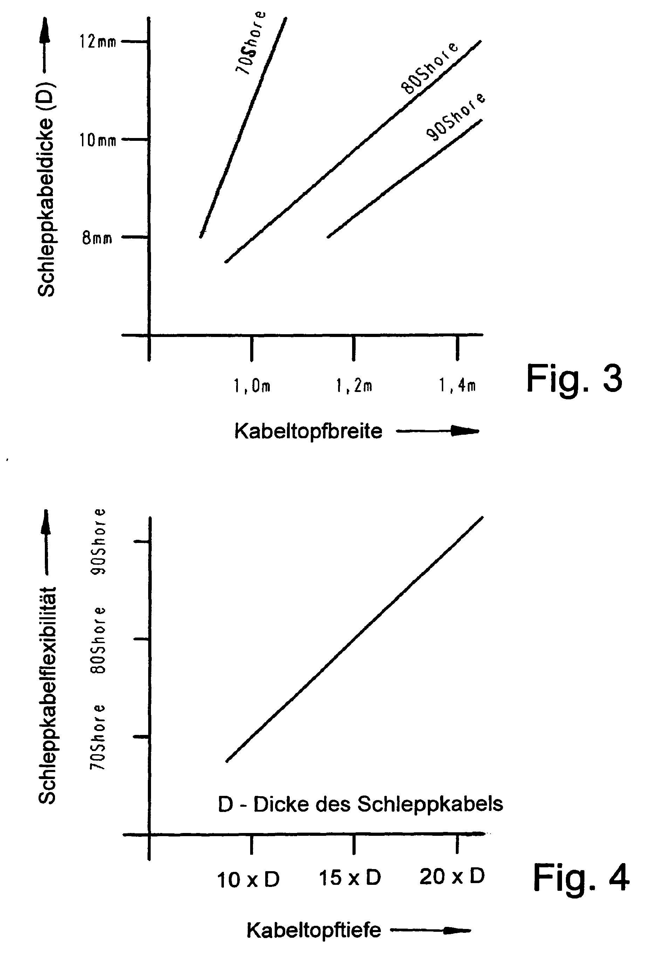

In Fig. 3 ist schematisch ein Schaubild gezeigt, in welchem die Dicke D des Schleppkabels über der Kabeltopfbreite aufgetragen ist. In den Fig. 1 und 2 trägt die Dicke des Schleppkabels das Bezugszeichen 24, die Breite des Kabeltopfes das Bezugszeichen 23. Für ausgewählte Schleppkabeldicken lässt sich für bestimmte Shore-Härten des Kabels mit diesem Diagramm auf einfache Weise die Kabeltopfbreite bestimmen. Danach nimmt die Kabeltopfbreite mit zunehmender Dicke und zunehmender Shore-Härte des Schleppkabels zu.

Fig. 4 zeigt die Abhängigkeit der Schleppkabelflexibilität in ausgewählten Shore-Härten über der Kabeltopftiefe, wobei letztere als Produkt eines Faktors mit der Dicke D des Schleppkabels angegeben ist. Fig. 4 ist zu entnehmen, dass die Kabeltopftiefe mit zunehmender Shore-Härte des Schleppkabels zunimmt und, wie zuvor erwähnt, etwa zwischen 8 x D und 22 x D liegt, wenn mit D die Dicke des Schleppkabels bezeichnet wird.

Generell gilt, dass je kleiner der Bogen eines der Mäander 14 im Topf fällt, desto enger ist der Kabeltopf auszubilden. Je kleiner also der Bogen des Mäanders ist, umso geringer ist die Tiefe 15 des Kabeltopfes.

Ein beispielhafter Kabeltopf 3 hat beispielsweise eine Höhe 26 von etwa 2,5 m, eine Breite 23 von etwa 1,3 m und eine Tiefe 15 von etwa 12 cm. Ferner beispielhaft hat das Flachkabel 17 eine Dicke 24 von 8 mm und eine Breite von 42 mm. Üblicherweise liegt die Shore-Härte des Kabels zwischen 65 und 95 Shore. Besonders vorteilhaft entspricht die Höhe 26 des Kabeltopfes der Höhe einer Bodenumwehrung des Bauaufzugs (nicht dargestellt). Es ist klar, dass die vorgenannten Abmessungen lediglich beispielhaft angegeben sind; so können sowohl für die genannten Abmessungen als auch für die Härte des Kabels auch andere Werte zur Anwendung kommen.

Damit ist eine Vorrichtung zum Sammeln eines Schleppkabels eines Aufzugs insbesondere aber nicht ausschließlich eines Bauaufzugs, geschaffen, bei welcher die Handhabung des Kabels deutlich verbessert ist.

## Patentansprüche

1. Vorrichtung zum Sammeln eines Schleppkabels (2) eines Aufzugs, insbesondere Bauaufzugs,
mit einem Kabeltopf (3), welcher an seinem oberen Rand (4) eine Öffnung (5) aufweist, durch welche das Schleppkabel (2) in dem Kabeltopf (3) ablegbar oder aus diesem herausführbar ist,
**dadurch gekennzeichnet,**
**dass** das Schleppkabel (2) ein Flachkabel (17) mit einer Schmalseite (20) und einer Breitseite (21) ist und die Schmalseite (20) des Flachkabels (17) im Kabeltopf (3) etwa parallel zu dessen Längsachse (22) verläuft, und
**dass** der Kabeltopf (3) einen langgestreckten Querschnitt (13) aufweist und derart angeordnet und ausgebildet ist, dass das Schleppkabel (2) in dem Kabeltopf (3) in Mäandern (14) ablegbar ist.

2. Vorrichtung nach Anspruch 1, **dadurch gekennzeichnet, dass** die im Kabeltopf (3) gebildeten Mäander (14) des Schleppkabels (2) übereinander liegend angeordnet sind.

3. Vorrichtung nach Anspruch 1 oder 2, **dadurch gekennzeichnet, dass** der Querschnitt der Öffnung (5) demjenigen des Kabeltopfes (3) entspricht.

4. Vorrichtung nach einem der Ansprüche 1 bis 3, **dadurch gekennzeichnet, dass** der Kabeltopf (3) einen rechteckigen Querschnitt (13) hat, wobei das Verhältnis von Kabeltopfbreite (23) zu Kabeltopftiefe (15) etwa 5:1 bis 15:1, vorzugsweise etwa 10:1, beträgt.

5. Vorrichtung nach Anspruch 4, **dadurch gekennzeichnet, dass** Kabeltopftiefe (15) und Kabeltopfbreite (23) mit zunehmender Flexibilität und damit abnehmender Shore-Härte des Schleppkabels (2) abnehmen.

6. Vorrichtung nach Anspruch 4 oder 5, **dadurch gekennzeichnet, dass** das Verhältnis von Kabeltopftiefe (15) zur Dicke (24) des Schleppkabels (2) etwa 8:1 bis 22:1, vorzugsweise 10:1 bis 20:1, besonders bevorzugt 15:1 beträgt.

## Claims

1. Device for collecting a trailing cable (2) of a lift or hoist and in particular of a construction hoist, having a cable receptacle (3) which has, in its upper edge (4), an opening (5) through which the trailing cable (2) can be laid down in the cable receptacle (3) or withdrawn therefrom, **characterised in that** the trailing cable (2) is a flat cable (17) having a narrow face (20) and a wide face (21) and in the cable receptacle (3) the narrow face (20) of the flat cable (17) extends approximately parallel to the longitudinal axis (22) of the cable receptacle (3), and **in that** the cable receptacle (3) is of an elongated cross-section (13) and is so arranged and formed that the trailing cable (2) can be laid down in the cable receptacle (3) in meanders (14).

2. Device according to claim 1, **characterised in that** the meanders (14) of the trailing cable (2) which are formed in the cable receptacle (3) are arranged above one another.

3. Device according to claim 1 or 2, **characterised in that** the cross-section of the opening (5) corresponds to that of the cable receptacle (3).

4. Device according to one of claims 1 to 3, **characterised in that** the cable receptacle (3) is of a rectangular cross-section (13), the ratio of the cable receptacle's width (23) to the cable receptacle's depth (15) being approximately 5:1 to 15:1 and preferably approximately 10:1.

5. Device according to claim 4, **characterised in that** the cable receptacle's depth (15) and the cable receptacle's width (23) decrease as the flexibility of the trailing cable (2) increases and its Shore hardness thus decreases.

6. Device according to claim 4 or 5, **characterised in that** the ratio of the cable receptacle's depth (15) to the thickness (24) of the trailing cable (2) is approximately 8:1 to 22:1, and preferably 10:1 to 20:1, and as a particular preference 15:1.

## Revendications

1. Dispositif pour recueillir un câble traînant (2) d'un ascenseur, en particulier d'un ascenseur de chantier,
comprenant un pot à câble (3) qui présente à sa bordure supérieure (4) une ouverture (5) à travers laquelle le câble traînant (2) peut être déposé dans le pot à câble (3) ou mené hors de celui-ci,
**caractérisé en ce que**
le câble traînant (2) est un câble plat (17) avec un petit côté (20) et un grand côté (21), et le petit côté (20) du câble plat (17) dans le pot à câble (3) s'étend approximativement parallèlement à son axe longitudinal (22), et
**en ce que** le pot à câble (3) présente une section transversale (13) étirée en longueur et est agencé et réalisé de telle façon que le câble traînant (2) peut être déposé dans le pot à câble (3) sous forme de méandres (14).

2. Dispositif selon la revendication 1, **caractérisé en ce que** les méandres (14), formés dans le pot à câble (3), du câble traînant (2) sont agencés disposés les uns au-dessus des autres

3. Dispositif selon la revendication 1 ou 2, **caractérisé en ce que** la section transversale de l'ouverture (5) correspond à celle du pot à câble (3).

4. Dispositif selon l'une des revendications 1 à 3, **caractérisé en ce que** le pot à câble (3) a une section rectangulaire (13), dans laquelle le rapport de la largeur (23) sur la profondeur (15) du pot à câble s'élève à environ 5:1 à 15: 1, de préférence environ 10:1.

5. Dispositif selon la revendication 4, **caractérisé en ce que** la profondeur (15) et la largeur (23) du pot à câble diminue avec une augmentation de la flexibilité et ainsi avec une diminution de la dureté Shore du câble traînant (2).

6. Dispositif selon la revendication 4 ou 5, **caractérisé en ce que** le rapport de la profondeur (15) du pot à câble sur l'épaisseur (24) du câble traînant (2) s'élève à environ 8:1 à 22:1, de préférence 10:1 à 20:1, et de manière particulièrement préférée 15:1.
